# FASCICULE DE BREVET EUROPEEN

(11) **EP 0 720 761 B1**
(45) Date de publication et mention de la délivrance du brevet: **27.11.2002**
(21) Numéro de dépôt: 95943539.7
(22) Date de dépôt: 18.07.1995
(51) Int. Cl.: G06K 7/06

(54) **ETUI RECEPTEUR POUR UNE CARTE A CIRCUIT(S) INTEGRE(S) A CONTACT**
KONTAKT-CHIPKARTENHALTER
HOLDER FOR A CONTACT IC CARD

(30) Priorité: 18.07.1994 FR 9408842
(43) Date de publication de la demande: 10.07.1996
(73) Titulaire: ITT INDUSTRIES, 39100 Dole (FR)
(72) Inventeur: BRICAUD, Hervé, F-39100 Dôle (FR); VALCHER, Fabrice, F-39100 Dôle (FR)
(74) Mandataire: Kohn, Philippe
(86) Numéro de dépôt international: FR9500958
(87) Numéro de publication internationale: WO96002892

(56) Documents cités:
- EP-A- 0 316 700
- EP-A- 0 366 513
- DE-A- 3 840 663
- DE-A- 4 218 970

## Description

La présente invention concerne un étui récepteur pour une carte à circuit(s) intégré(s) à contact, également appelée carte à mémoire électronique, ou carte à puce.

L'invention concerne plus particulièrement un étui récepteur pour une carte du type comportant, sur une de ses faces principales, des plages de contact reliées à la mémoire contenue dans la carte qu'il est nécessaire de raccorder électriquement à un dispositif de lecture et/ou d'écriture relié à un circuit d'exploitation des données contenues dans la carte.

Selon l'état de la technique, le problème du raccordement électrique des plages de la carte et de la détection de la présence de la carte dans sa position d'exploitation a été résolu au moyen d'un cadre de contact du type de celui décrit et représenté dans le document EP-A-0.316.699 qui est une pièce moulée en matière plastique qui est surmoulé sur des lames conductrices pour constituer un connecteur électrique de raccordement avec les plages conductrices de la carte et qui compote également des moyens de guidage de la carte en vue de sa mise en place dans une position correcte dans le cadre de contact.

Cette technique connue visant à intégrer dans un composant unique moulé les fonctions de raccordement électrique et les fonctions de positionnement de la carte nécessite de réaliser un cadre de contact pour le raccordement qui est spécifique à chaque type de carte et à chaque application.

De plus, cette technique nécessite de réaliser par surmoulage une pièce de grandes dimensions comportant des ailes latérales pour le guidage de la carte.

Cette technique nécessite également de réaliser un ensemble en deux pièces dans la mesure où le surmoulage sur les lames conductrices ne permet pas de réaliser, avec un même outillage, une partie complémentaire formant couvercle de fermeture qui permet de maintenir la carte en appui contre les lames conductrices.

Le document DE-A-3.840.663 décrit et représente une structure moulée similaire présentant globalement les mêmes inconvénients, que les lames de contact soient fixées par surmoulage de la matière plastique ou bien qu'elles soient montées individuellement une par une dans des logements correspondants de la traverse pour constituer un connecteur.

La présente invention a pour but de proposer un nouveau concept pour le raccordement électrique et le fonctionnement d'une carte à circuit(s) intégré(s) à contact qui remédie aux inconvénients qui viennent d'être mentionnés, notamment en ce qu'il permet une grande modularité permettant de faire appel à divers connecteurs appartenant à une gamme standardisée et à un étui récepteur pour le guidage et le positionnement de la carte qui soit un composant commun à différentes applications.

Dans ce but, l'invention propose un étui récepteur pour une carte à mémoire électronique du type comportant deux glissières parallèles de guidage de deux bords latéraux de la carte qui sont reliées entre elles par au moins une traverse de liaison réalisée en une seule pièce moulée avec les deux glissières, caractérisé en ce que la traverse comporte deux tronçons latéraux dont la longueur est sensiblement égale à celle des glissières , et un tronçon central de longueur réduite qui comporte au moins un logement destiné à recevoir un composant qui est rapporté sur l'étui et qui est susceptible de coopérer avec la carte.

Selon d'autres caractéristiques de l'invention :
- le fond du logement comporte une fenêtre pour le passage d'un élément actif du composant qui est susceptible de coopérer avec la carte ;
- le composant est un connecteur électrique qui comporte une pluralité de lames de contact électrique qui sont susceptibles de coopérer avec des plages de contact formées sur une face principale de la carte et qui sont portées par un corps en matériau isolant agencé dans ledit logement ;
- chacune des lames conductrices s'étend à travers une fenêtre formée dans le fond du logement ;
- le composant est un commutateur de détection de la présence d'une carte en position d'utilisation qui comporte un organe de déclenchement qui est susceptible de coopérer avec la carte ;
- L'étui comporte des moyens de butée qui coopèrent avec un bord transversal de la carte pour définir une position de fin de course d'introduction de la carte dans l'étui ;
- le tronçon central est situé sensiblement à mi-longueur des glissières ;
- les moyens de butée sont agencés dans les tronçons latéraux de la traverse ;
- la longueur du tronçon central est égale sensiblement à celle des tronçon latéraux ;
- l'étui comporte une seconde traverse parallèle à la première qui délimite avec cette dernière une fente pour le passage de la carte et qui est réalisée en une seule pièce moulée avec les glissières et la première traverse ;
- la forme de la seconde traverse est sensiblement identique à celle de la première traverse.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section selon la ligne 1-1 de la figure 2 qui illustre un premier mode de réalisation d'un étui conforme aux enseignements de l'invention ;
- la figure 2 est une vue en section selon la ligne 2-2 de la figure 1 et ;
- la figure 3 est une vue latérale selon la flèche F3 de la figure 2 ;
- la figure 4 est une vue similaire à celle de la figure 3 qui illustre un second mode de réalisation de l'étui ;
- la figure 5 est une vue extérieure de la face principale de l'étui de la figure 4 sur laquelle sont montés un connecteur et un commutateur ; et
- la figure 6 est une vue, similaire à celle de la figure 3, de l'étui illustré aux figures 4 et 5.

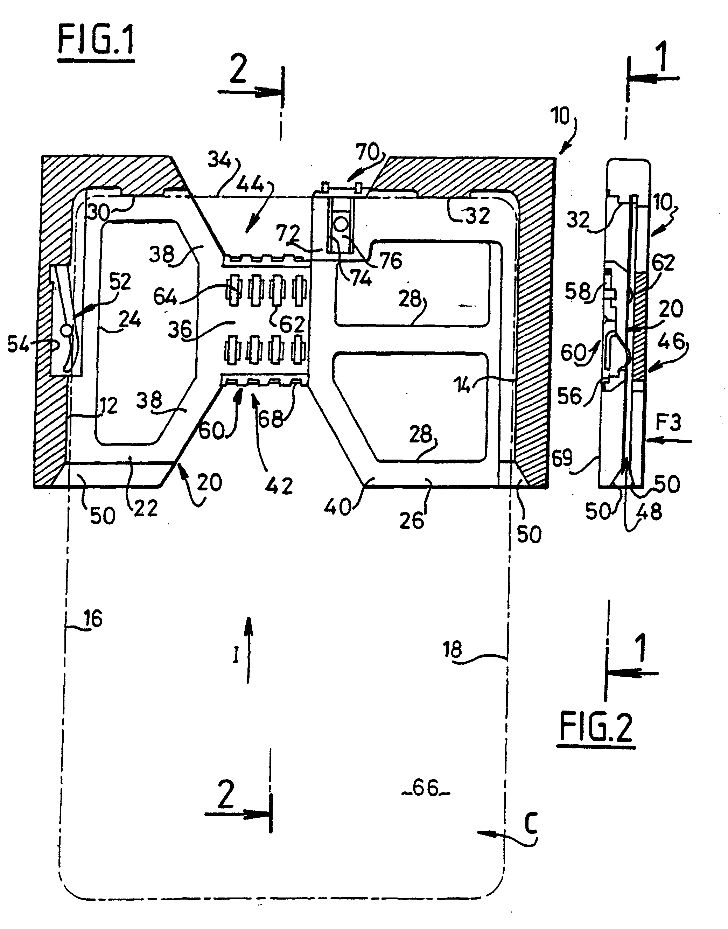

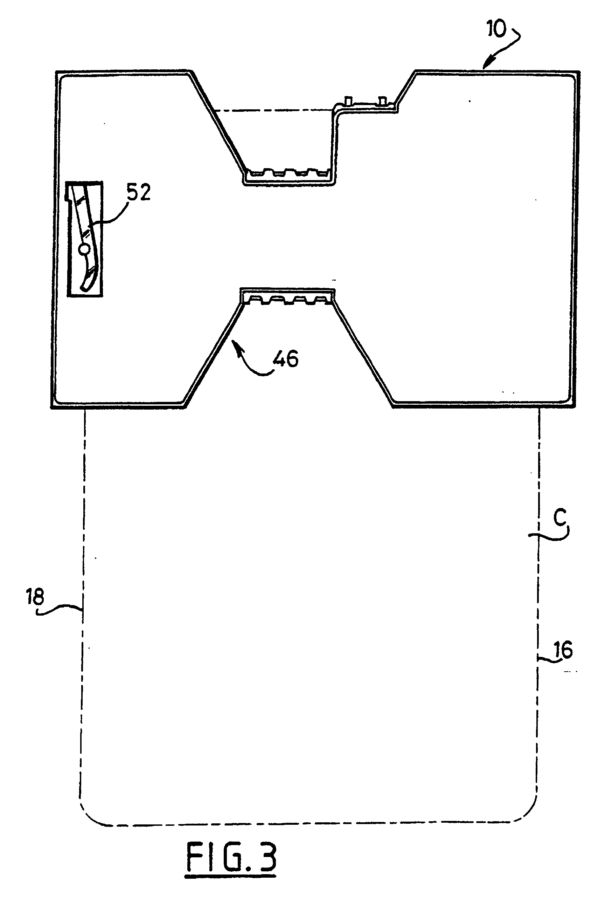

On a représenté sur les figure 1 à 3 un étui récepteur 10 pour une carte à mémoire électronique C qui est représenté en silhouette sur les figures 1 et 3. L'étui 10 qui est une pièce unique moulée en matière plastique.

Afin d'assurer le guidage latéral de la carte C, l'étui 10 comporte deux glissières latérales 12 et 14 qui sont parallèles et qui coopèrent avec les bords latéraux de plus grandes dimensions 16 et 18 de la carte C afin d'assurer le guidage de la carte C, selon la direction I lors de l'introduction de cette dernière dans l'étui 10.

Les glissières 12 et 14 sont reliées entre elles par une traverse 20 qui est réalisée et venue de matière par moulage en matière plastique.

La glissière 20 comporte un premier tronçon latéral 22 ajouré par une fenêtre 24 et un second latéral opposé 26 ajouré par des fenêtres 28.

Les tronçons latéraux 22 et 26 de la traverse 20 présentent une longueur sensiblement égale à celle des glissières de guidage 12 et 14 et chacun d'eux se termine par une butée 30, 32 respectivement qui s'étend transversalement pour coopérer avec un bord transversal avant 34 de la carte C afin de définir une position de fin d'introduction de la carte C dans l'étui 10, position dans laquelle la carte C est représentée en silhouette sur les figures 1 et 3.

La traverse 20 comporte également un tronçon central 36 de longueur réduite qui est agencé sensiblement à mi-longueur de l'étui, c'est-à-dire à mi-longueur des glissières de guidage 12 et 14.

Le tronçon central 36 est relié aux tronçons latéraux 22 et 26 par des bras inclinés 38 et 40 qui confèrent à la traverse une allure générale en forme de "papillon".

La traverse 20 comporte ainsi, dans sa partie centrale, deux dégagements opposés 42 et 44.

Comme on peut le voir aux figures 2 et 3, les glissières 12 et 14 sont quasi reliées entre elles par une traverse pleine 46 dont la forme est identique à celle de la première traverse 20 et qui est également réalisée venue de matière par moulage avec la première traverse 20 et les glissières 12 et 14.

Les traverses 20 et 46 délimitent entre elles une fente ou passage 48 permettant l'introduction de la carte C dans l'étui 10.

L'extrémité ouverte du passage 48 est chanfreinée par des chanfreins 50 pour faciliter l'introduction de la carte.

On a également représenté sur les figures un frein de carte 52, d'une conception connue, agencé dans un logement 54 de la glissière 12.

Conformément à l'invention, le tronçon central 36 de la première traverse 20 comporte un logement 56 qui reçoit le corps en matériau isolant 58 d'un connecteur électrique de raccordement 60 dont des lames conductrices 62 font saillie à travers des fentes 64 formées dans le fond du logement 56 pour venir coopérer avec des plages de contact (non représentées), agencées sur la face principale opposée à la face 66 de la carte visible sur la figure 1.

Le connecteur 60 comporte également des pattes de raccordement électriques 68 qui sont par exemple destinées à être brasées sur une plaque à circuit imprimé sur laquelle vient prendre appui la face 69 de la première traverse 20.

Le brasage des pattes 68 et le contrôle des brasures est rendu particulièrement aisé du fait des dégagements 42 et 44.

Par ailleurs, les dégagements 42 et 44 permettent de disposer d'une grande place sur la carte à circuit imprimé pour réaliser des pistes conductrices et/ou agencer d'autres composants.

Dans le mode de réalisation illustré sur les figures, l'étui est également équipé d'un commutateur 70 de détection de la présence de la carte C qui est disposé dans un logement formé à cet effet dans un prolongement 72 du tronçon latéral 26 de la traverse 20.

Le fond du logement comporte au moins une fente 74 pour le passage d'un levier 76 de déclenchement de l'organe sensible du commutateur 70, le levier 76 coopérant d'abord avec le bord transversal avant 34 de la carte C lors de l'introduction de cette dernière, puis avec sa face plane principale.

Le connecteur électrique 60 et le commutateur 70 sont de conceptions connues et pourra notamment se reporter au contenu des demandes de brevets de français n°93.15633 et n°94.06684 pour en connaître des exemples de réalisation.

Le connecteur peut par exemple être constitué par un élément porte-contacts en matière isolante dans lequel sont montées les lames conductrices 62.

La conception de l'étui 10 selon l'invention est particulièrement avantageuse en ce qu'elle permet avec une pièce moulée principale en matière plastique d'agencer des connecteurs et/ou des commutateurs de différentes natures en fonction des utilisations et de réaliser ainsi une grande standardisation des composants.

Les connecteurs peuvent notamment varier par la nature de leurs pattes de raccordement électrique 68 selon qu'elles ont par exemple pour but de permettre un brasage par report à plat ou un piquage sur une carte à circuit imprimé.

Le nombre des plages conductrices peut également varier en fonction du type de la carte utilisée dans l'étui.

Ce premier mode de réalisation est particulièrement avantageux en ce qu'il permet, grâce à la forme "papillon", d'économiser une grande quantité de matière plastique isolante.

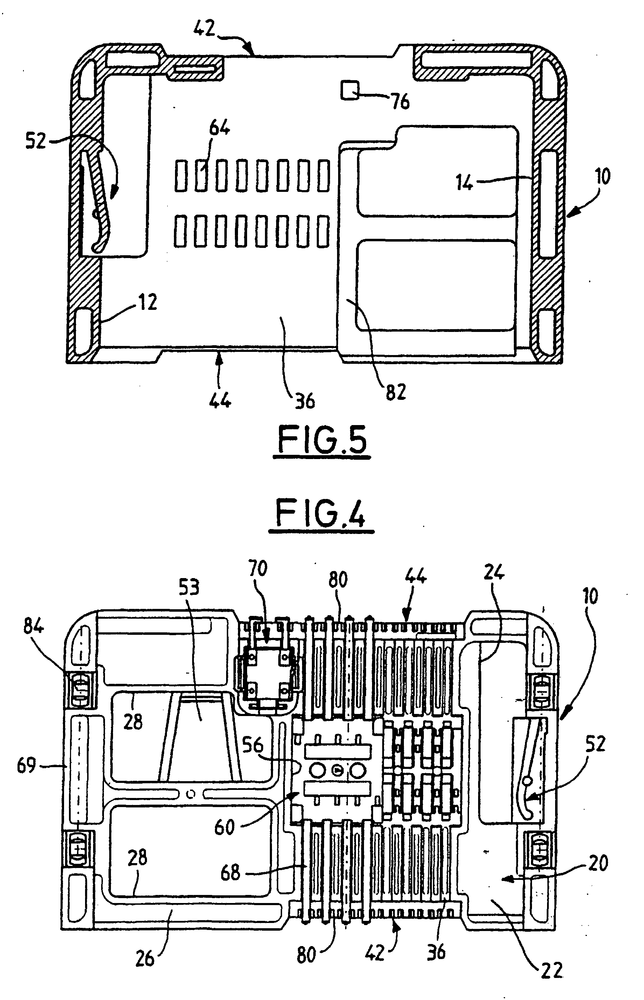

Dans le mode de réalisation illustré aux figures 4 à 6, le tronçon central 36 de la traverse 20 présente une largeur sensiblement égale aux tronçons latéraux et la traverse 20 présente ainsi une forme sensiblement rectangulaire et ajourée.

Comme on peut le voir aux figure 4 et 5, le nombre des fentes 64 peut être plus élevé que dans le premier mode de réalisation illustré sur la figure 1 afin de permettre le montage d'un porte-contacts à huit où à seize lames de contact en fonction du type de la carte qui est introduite dans l'appareil équipé de l'étui 10.

Sur la figure 5, on voit qu'un connecteur 60 est mis en place dans un logement 56 et que ses pattes de raccordement 68 se prolongent longitudinalement en direction des bords transversaux d'extrémité 80 du tronçon central 36 de la traverse 20.

Cette conception est moins avantageuse, en ce qu'elle nécessite plus de matière plastique, que celle décrite en référence aux figures 1 à 3 dans laquelle les dégagements 42 et 44 et la longueur réduite du tronçon central 46 ont aussi pour avantage d'éloigner les pattes de raccordement 68 du bord ouvert et chanfreiné de la fente 48 pour la carte C, et d'éloigner ainsi ces pattes de raccordement des doigts de l'utilisateur, le danger de décharges électrostatiques étant ainsi réduit.

Toutefois, ce second mode de réalisation permet de protéger entièrement la portion de la carte C qui est insérée dans l'étui et elle confère à ce dernier une plus grande rigidité.

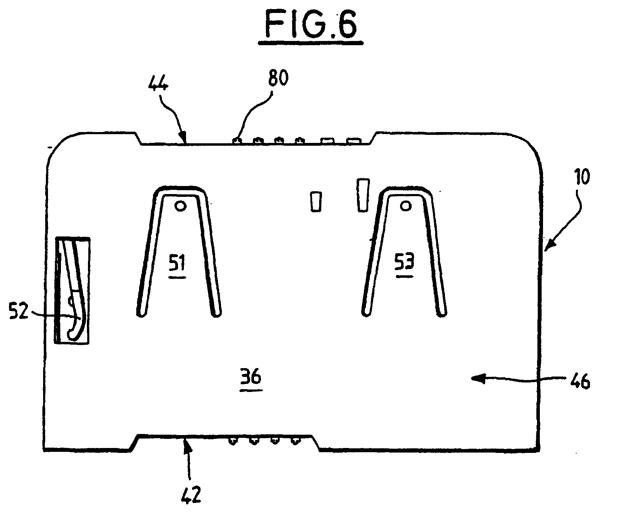

Comme on peut le voir sur la figure 6, le frein de carte 52 est ici complété par deux freins complémentaires 51 et 53 réalisés sous la forme de lames venues de matière et formées dans la traverse pleine 46 qui constitue la face supérieure de l'étui.

Comme on peut le voir sur la figure 5, la face 69 de la traverse 20 comporte quatre pieds 84 pour le positionnement et la fixation de l'étui et qui sont reçus à cet effet dans les trous correspondants d'une carte à circuit imprimé (non représentée).

Comme on peut le voir également sur la figure 4, la face interne de la traverse 20 présente un zone 82 en retrait de manière à, dans cette zone, accroître la largeur de la fente 48 pour permettre le passage des gravures en relief figurant sur la face principale de la carte.

## Revendications

1. Etui récepteur (10) pour une carte à mémoire électronique (C) du type comportant deux glissières parallèles (12, 14) de guidage de deux bords latéraux (16, 18) de la carte (C) qui sont reliées entre elles (12, 14) par au moins une traverse de liaison (20)réalisée en une seule pièce moulée avec les deux glissières (12, 14), **caractérisé en ce que** la traverse (20) comporte deux tronçons latéraux (22, 26) dont la longueur est sensiblement égale à celle des glissières (12, 14), et un tronçon central (36) de longueur réduite qui comporte au moins un logement destiné à recevoir un composant (60, 70) qui est rapporté sur l'étui (10) et qui est susceptible de coopérer avec la carte (C).

2. Etui selon la revendication 1, **caractérisé en ce que** le fond du logement (56) comporte une fenêtre (64, 74) pour le passage d'un élément actif (62, 76) du composant (60, 70) qui est susceptible de coopérer avec la carte (C).

3. Etui selon l'une des revendications 1 ou 2, **caractérisé en ce que** le composant est un connecteur électrique (60) qui comporte un pluralité de lames (62) de contact électrique qui sont susceptibles de coopérer avec les plages de contact formées sur une face principale (66) de la carte (C) et qui sont portées par un corps (58) en matériau isolant agencé dans ledit logement (56).

4. Etui selon la revendication 3, **caractérisé en ce que** chacune des lames conductrices (62) s'étend à travers une fenêtre (64) formée dans le fond du logement (56).

5. Etui selon l'une des revendications 1 ou 2, **caractérisé en ce que** le composant est un commutateur (70) de détection de présence de la carte (C) en position d'utilisation qui comporte un organe de déclenchement (76) qui est susceptible de coopérer avec la carte (C, 34).

6. Etui selon l'une quelconque des revendications précédentes, **caractérisé en ce qu'**il comporte des moyens (30, 32) de butée qui coopèrent avec un bord transversal (34) de la carte (C) pour définir une position de fin de course d'introduction de la carte (C) dans l'étui (10).

7. Etuiselon l'une quelconque des revendications précédentes, **caractérisé en ce que** le tronçon central (36) de longueur réduite est situé sensiblement à mi-longueur des glissières (12, 14).

8. Etui selon la revendication 7 prise en combinaison avec la revendication 6, **caractérisé en ce que** les moyens de butée (32) sont agencés dans les tronçons latéraux (22, 26) de la traverse (20).

9. Etui selon l'une quelconque des revendications précédentes, **caractérisé en ce que** la longueur du tronçon central (36) est sensiblement égale à celle des tronçons latéraux (22, 26).

10. Etui selon l'une quelconque des revendications précédentes, **caractérisé en ce qu'**il comporte une seconde traverse (46) parallèle à la première traverse (20) qui délimite avec cette dernière une fente pour le passage de la carte (C) et qui est réalisée en une seule pièce moulée avec les glissières (12, 14) et la première traverse (20).

11. Etui selon la revendication précédente, **caractérisé en ce** la forme de la seconde traverse (46) est sensiblement identique à celle de la première traverse (20).

12. Etui selon la revendication 1, **caractérisé en ce que** la traverse de liaison (20) présente une zone en retrait (82) pour permettre le passage de gravures en relief figurant sur la face principale de la carte (C).

## Patentansprüche

1. Halter (10) für eine elektronische Speicherkarte (C) mit zwei parallelen Leitschienen (12, 14) an den beiden Seitenrändern (16, 18) der Karte (C), die über mindestens eine Verbindungsleiste (20) miteinander verbunden sind, die aus einem einzigen Formstück mit den beiden Schienen (12, 14) hergestellt wurde, **dadurch gekennzeichnet, dass** die Leiste (20) zwei Seitenteilstücke (22, 26), die fast die gleiche Länge haben wie die Schienen (12, 14), und ein kürzeres Mittelteilstück (36) umfasst, das mindestens eine Aufnahme für eine Komponente (60, 70) besitzt, die auf den Halter (10) aufgesteckt ist und mit der Karte (C) in Verbindung steht.

2. Halter nach Anspruch 1, **dadurch gekennzeichnet, dass** sich im Boden der Aufnahme (56) für den Durchlass eines aktiven Elementes (62, 76) der Komponente ein Fenster (64,. 74) befindet, das mit der Karte (C) in Verbindung steht.

3. Halter nach einem der vorhergehenden Ansprüche, **dadurch gekennzeichnet, dass** es sich bei der Komponente um einen elektrischen Verbinder (60) mit einer Vielzahl elektrischer Kontaktzungen (62) handelt, die mit den Kontaktbereichen auf einer Vorderseite (66) der Karte (C) in Verbindung stehen und sich auf einem Hauptstück (58) aus Isoliermaterial befinden, das in der Aufnahme (56) angeordnet ist.

4. Halter nach Anspruch 3, **dadurch gekennzeichnet, dass** sich jede dieser leitenden Kontaktzungen (62) quer über ein Fenster (64) erstreckt, das sich am Boden der Aufnahme (56) befindet.

5. Halter nach einem der Ansprüche 1 oder 2, **dadurch gekennzeichnet, dass** es sich bei der Komponente um einen Erfassungsschalter (70) für das Vorhandenseín der Karte (C) in Benutzungsposition handelt, der einen Auslöser (76) besitzt, welcher mit der Karte (C, 34) in Verbindung steht.

6. Halter nach einem der vorhergehenden Ansprüche, **dadurch gekennzeichnet, dass** er Anschläge (30, 32) besitzt, die mit einem quer verlaufenden Rand (34) der Karte (C) in Verbindung stehen, so dass für das Einführen der Karte (C) in den Halter (10) eine Endposition festgelegt ist.

7. Halter nach einem der vorhergehenden Ansprüche, **dadurch gekennzeichnet, dass** sich das kürzere Mittelteilstück (36) auf halber Länge zwischen den Schienen (12, 14) befindet.

8. Halter nach Anspruch 6 und 7, **dadurch gekennzeichnet, dass** die Anschläge (32) in den Seitenteilstucken (22 26) der Verbindungsleiste (20) angeordnet sind.

9. Halter nach einem der vorhergehenden Ansprüche, **dadurch gekennzeichnet, dass** die Länge des Mittelteilstücks (36) deutlich gleich der Länge der Seitenteilstücke (22, 26) ist.

10. Halter nach einem der vorhergehenden Ansprüche, **dadurch gekennzeichnet, dass** er eine zweite Leiste (46) parallel zur ersten Leiste (20) besitzt, die zusammen mit letzterer einen Spalt für den Durchgang der Karte (C) abgrenzt, und die mit den Schienen (12, 14) und der ersten Leiste (20) aus einem einzigen Formstück hergestellt worden ist.

11. Halter nach dem vorhergehenden Anspruch, **dadurch gekennzeichnet, dass** die Form der zweiten Leiste (46) ziemlich identisch mit der Form der ersten Leiste (20) ist.

12. Halter nach Anspruch 1, **dadurch gekennzeichnet, dass** die Verbindungsleiste (20) einen vertieften Bereich (82) aufweist, um den Durchgang von Reliefgravierung auf der Vorderseite der Karte (C) zu ermöglichen.

## Claims

1. Receiver case (10) for an electronic memory card (C) of the type including two parallel slideways (12, 14) for guiding two lateral edges (16, 18) of the card (C), which slideways are connected together (12, 14) by at least one linking cross-piece (20) moulded as a single part with the two slideways (12, 14), **characterized in that** the cross-piece (20) includes two lateral sections (22, 26) the length of which is substantially equal to that of the slideways (12, 14), and a central section (36) of shorter length, which includes at least one housing intended to receive a component (60, 70) which is attached to the case (10) and which is capable of engaging with the card (C).

2. Case according to Claim 1, **characterized in that** the bottom of the housing (56) includes a window (64, 74) for passage of an active element (62, 76) of the component (60, 70) which is capable of engaging with the card (C).

3. Case according to either of claims 1 and 2, **characterized in that** the component is an electrical connector (60) which includes a plurality of electrical contact blades (62) which are capable of engaging with the contact pads formed on a main face (66) of the card (C) and which are carried by a body (58) made of insulating material arranged in the said housing (56).

4. Case according to claim 3, **characterized in that** each of the conducting blades (62) extends through a window (64) formed in the bottom of the housing (56).

5. Case according to either of claims 1 and 2, **characterized in that** the component is a switch (70) for detecting the presence of the card (C) in the use position, which includes a tripping member (76) which is capable of engaging with the card (C, 34).

6. Case according to any one of the preceding claims; **characterized in that** it includes limit-stop means (30, 32) which engage with a transverse edge (34) of the card (C) in order to define a position of end of insertion travel of the card (C) in the case (10).

7. Case according to any one of the preceding claims, **characterized in that** the central section (36) of shorter length is located substantially halfway along the slideways (12, 14).

8. Case according to claim 7, taken in combination with claim 6, **characterized in that** the limit-stop means (32) are arranged in the lateral sections (22, 26) of the cross-piece (20).

9. Case according to any one of the preceding claims, **characterized in that** the length of the central section (36) is substantially equal to that of the lateral sections (22, 26).

10. Case according to any one of the preceding claims, **characterized in that** it includes a second cross-piece (46) parallel to the first cross-piece (20) which delimits with the latter a slot for passage of the card (C) and which produced as a single moulded part with the slideways (12, 14) and first cross-piece (20).

11. Case according to the preceding claim, **characterized in that** the shape of the second cross-piece (46) is substantially identical to that of the first cross-piece (20).

12. Case according to claim 1, **characterized in that** the linking cross-piece (20) has an area (82) set back in order to allow passage of raised engravings appearing on the main face of the card (C).
